# EUROPÄISCHE PATENTSCHRIFT

(11) **EP 3 059 409 B1**
(45) Veröffentlichungstag und Bekanntmachung des Hinweises auf die Patenterteilung: **16.08.2017**
(21) Anmeldenummer: 16154835.9
(22) Anmeldetag: 09.02.2016
(51) Int. Cl.: F01N 3/28, F01N 3/20

(54) **ABGASBEHANDLUNGSVORRICHTUNG**
EXHAUST GAS TREATMENT DEVICE
DISPOSITIF DE TRAITEMENT DE GAZ D'ÉCHAPPEMENT

(30) Priorität: 18.02.2015 DE 102015102301
(43) Veröffentlichungstag der Anmeldung: 24.08.2016
(73) Patentinhaber: Volkswagen Aktiengesellschaft, 38440 Wolfsburg (DE)
(72) Erfinder: RIEKHOF, Peter, 38304 Wolfenbüttel (DE)
(74) Vertreter: Bungartz, Florian

(56) Entgegenhaltungen:
- WO-A1-2009/081231
- DE-A1- 2 321 578
- DE-A1- 3 738 538
- DE-A1- 4 440 160
- JP-A- S57 183 511
- JP-A- S63 285 217
- US-A- 4 039 294
- US-A1- 2010 071 352

## Beschreibung

Die Erfindung betrifft eine Abgasbehandlungsvorrichtung sowie ein Verfahren zum Betreiben einer solchen Abgasbehandlungsvorrichtung.

Vorrichtungen zur Abgasbehandlung in Kraftfahrzeugen, wie insbesondere Katalysatoren und Partikelfilter, weisen ein Gehäuse auf, innerhalb dessen das die Behandlung des Abgases bewirkende Element (Katalysatormaterial auf einer Tragstruktur oder Filterstruktur) angeordnet ist. Das Gehäuse bildet weiterhin einen Einlass- und einen Auslassstutzen aus, über die die Abgasbehandlungsvorrichtung in den Abgasstrang der Brennkraftmaschine des Kraftfahrzeugs integrierbar ist. Die zu der Abgasbehandlungsvorrichtung und von dieser weg führenden Rohrleitungen des Abgasstrangs weisen zumeist einen Strömungsquerschnitt auf, der deutlich kleiner ist als der Strömungsquerschnitt des Gehäuses der Abgasbehandlungsvorrichtung in demjenigen Abschnitt, in dem das die Behandlung des Abgases bewirkende Element angeordnet ist. Die Einlass- und Auslassstutzen der Abgasbehandlungsvorrichtung sind daher in der Regel trichterförmig aufweitend beziehungsweise zulaufend ausgebildet, um strömungstechnisch nachteilige Absätze im Abgasstrang zu vermeiden. Der relativ große Strömungsquerschnitt des die Behandlung des Abgases bewirkenden Elements dient insbesondere der Schaffung einer möglichst großen Kontaktfläche zu dem Abgas sowie der Verringerung der lokalen Strömungsgeschwindigkeit, wodurch eine ausreichend große Verweilzeit des Abgases innerhalb der Abgasbehandlungsvorrichtung erreicht werden kann.

Aus der DE 41 04 637 A1 ist bekannt, in den trichterförmigen Einlassstutzen einer Katalysatorvorrichtung statische Leitbleche zu integrieren, die beispielsweise die Form von konzentrisch angeordneten Kegelmänteln haben können und sich, wie der Einlassstutzen selbst, in Strömungsrichtung des Abgases aufweiten. Dabei kann vorgesehen sein, dass der Öffnungswinkel der Leitbleche geringer als der Öffnungswinkel des Einlassstutzen ist. Durch die Leitbleche soll eine gleichmäßigere Beaufschlagung der mit Katalysatormaterial versehenen Tragstruktur über der gesamten Querschnittfläche erreicht werden.

Weiterhin ist aus der DE 10 2011 117 090 A1 eine Abgasbehandlungsvorrichtung bekannt, die in einem Gehäuse zwei seriell geschaltete Abgasbehandlungselemente umfasst. Dabei ist das stromauf gelegene erste Abgasbehandlungselement in einem Abschnitt des Gehäuses angeordnet, in dem dieses mittels eines Innenrohrs in einen zentralen Bereich und einen peripheren Bereich unterteilt ist, wobei das erste Abgasbehandlungselement entweder in dem zentralen oder in dem peripheren Bereich angeordnet ist. Das stromab gelegene zweite Abgasbehandlungselement füllt dagegen den gesamten Innenraum des Gehäuses in dem entsprechenden Abschnitt aus. Im Bereich eines Einlasses der Abgasbehandlungsvorrichtung sind Mittel vorgesehen, durch die die Abgasströmung entweder über den zentralen Bereich oder den peripheren Bereich geführt wird. Bei dem zweiten Abgasbehandlungselement kann es sich insbesondere um einen Dreiwegekatalysator handeln, während das erste Abgasbehandlungselement ein HC-Absorber sein kann. Dieser dient dazu, Kohlenwasserstoffe zu absorbieren, solange die Temperatur des Dreiwegekatalysators noch nicht den Betriebstemperaturbereich erreicht hat. Zwischen dem ersten und dem zweiten Abgasbehandlungselement ist weiterhin eine Strömungsführungseinrichtung vorgesehen, die dafür sorgen soll, dass das zweite Abgasbehandlungselement im Wesentlichen immer identisch angeströmt wird, unabhängig davon, ob die Abgasströmung über den zentralen Bereich oder den peripheren Bereich geleitet wird.

Die JP S57-183511 A offenbart eine Abgasbehandlungsvorrichtung mit einem Gehäuse, das einen Einlass ausbildet, wobei sich der von dem Gehäuse ausgebildete Strömungsquerschnitt ausgehend von dem Einlass hin zu einem Hauptabschnitt vergrößert, wobei in dem Hauptabschnitt ein Abgasbehandlungselement angeordnet ist. In dem Abschnitt zwischen dem Einlass und dem Hauptabschnitt ist eine Strömungsleitvorrichtung innerhalb des von dem Gehäuse begrenzten Innenraums angeordnet ist. Die Strömungsleitvorrichtung ist in Form von zwei schwenkbaren Klappen ausgebildet, die in Abhängigkeit von der Temperatur des die Abgasbehandlungsvorrichtung beaufschlagenden Abgases verstellt werden können. Bei relativ kaltem Abgas ist vorgesehen, die Klappen derart zu positionieren, dass das Abgas auf einen zentralen Bereich des Abgasbehandlungselements fokussiert ist, während die Klappen bei relativ heißem Abgas derart positioniert sind, dass das Abgasbehandlungselemente vollständig durchströmt wird.

Die US 4,039,294 A beschreibt einen Partikelfilter zur Behandlung des Abgases von Verbrennungsmotoren, bei dem innerhalb eines von einem Gehäuse begrenzten Innenraums, der zwischen einem Einlass und einem Abgasbehandlungselement angeordnet ist, ein als Diffusor bezeichnetes und in Form eines einfachen oder eines doppelten, koaxialen Trichters ausgebildetes Strömungsleitelement angeordnet ist. Der Diffusor soll eine möglichst vollflächige Beaufschlagung des Abgasbehandlungselements sicherstellen.

Ausgehend von diesem Stand der Technik lag der Erfindung die Aufgabe zugrunde, die Funktion einer Abgasbehandlungsvorrichtung zu verbessern. Insbesondere sollte das thermische Verhalten der Abgasbehandlungsvorrichtung, d.h. das Aufwärmen des Abgasbehandlungselements bis hin zu einem Betriebstemperaturbereich oder ein Halten der Betriebstemperatur in diesem Betriebstemperaturbereich bei einem relativ geringen Abgaswärmestrom, optimiert werden.

Diese Aufgabe wird mittels einer Abgasbehandlungsvorrichtung gemäß dem Patentanspruch 1 gelöst. Ein Verfahren zum Betreiben einer solchen Abgasbehandlungsvorrichtung ist Gegenstand des Patentanspruchs 9. Vorteilhafte Ausgestaltungen der erfindungsgemäßen Abgasbehandlungsvorrichtung sind Gegenstände der abhängigen Patentansprüche und ergeben sich aus der nachfolgenden Beschreibung der Erfindung.

Der Erfindung liegt der Gedanke zugrunde, dass eine möglichst vollflächige Anströmung eines Abgasbehandlungselement in einer Abgasbehandlungsvorrichtung, wie sie in vorteilhafter Weise durch die Integration von sich konisch aufweisenden Leitblechen in einen Einlassstutzen der Abgasbehandlungsvorrichtung erreicht werden kann (vgl. DE 41 04 637 A1), nicht in jedem Betriebszustand der Abgasbehandlungsvorrichtung vorteilhaft ist. Vielmehr kann es vorteilhaft sein, insbesondere bei einem relativ geringen Massenstrom des durch die Abgasbehandlungsvorrichtung zu führenden Abgases, eine möglichst fokussierte und somit auf einen definierten Teilbereich beschränkte Anströmung des Abgasbehandlungselements vorzusehen. Dadurch kann beispielsweise für eine Abgasbehandlungsvorrichtung, die ihren Betriebstemperaturbereich noch nicht erreicht hat, eine schnellere Erwärmung des Abgasbehandlungselements in diesem Teilbereich erreicht werden. Ebenso kann auf diese Weise verhindert werden, dass bei einer Abgasbehandlungsvorrichtung, die bereits ihren Betriebstemperaturbereich erreicht hat, eine so starke Abkühlung des gesamten Abgasbehandlungselements infolge eines nur relativ kleine Abgasmassenstroms (mit entsprechend geringem Wärmeenergiestrom) erfolgt, dass die Wirkungsweise des Abgasbehandlungselements im relevanten Maße abnimmt. Durch eine fokussierte Anströmung des Abgasbehandlungselements kann nämlich die Temperatur in dem entsprechenden Teilbereich innerhalb des Betriebstemperaturbereichs gehalten werden. Dabei wird somit die von dem Abgasmassenstrom mitgeführte Wärmeenergie gezielt in nur einen Teilbereich des Abgasbehandlungselements eingebracht, um die Betriebstemperatur in diesem Teilbereich innerhalb des Betriebstemperaturbereichs zu halten. Ein starkes Abkühlen des übrigen Teilbereichs des Abgasbehandlungselements ist dabei weitgehend unschädlich, weil dieser Teilbereich ohnehin nicht im relevanten Maße von Abgas durchströmt wird.

Um diesen Grundgedanken der Erfindung umsetzen zu können, ist eine Abgasbehandlungsvorrichtung mit einem Gehäuse, das einen Einlass (und einen Auslass) ausbildet, vorgesehen, wobei sich der von dem Gehäuse ausgebildete Strömungsquerschnitt ausgehend von dem Einlass hin zu einem Hauptabschnitt vergrößert. Dabei ist in dem Hauptabschnitt ein Abgasbehandlungselement und in dem Abschnitt zwischen dem Einlass und dem Hauptabschnitt eine Strömungsleitvorrichtung innerhalb des von dem Gehäuse begrenzten Innenraums angeordnet. Die Strömungsleitvorrichtung dient dazu (und ist entsprechend ausgebildet), eine durch den Einlass eingetretene Abgasströmung aufzuweiten, um eine Anströmung des Abgasbehandlungselements in einem Strömungsquerschnitt, der größer als der Öffnungsquerschnitt des Einlasses ist, zu begünstigen. Weiterhin ist eine Verstellvorrichtung zur Veränderung der Position und/oder Ausrichtung der Strömungsleitvorrichtung (zumindest eines Strömungsleitelements davon) vorgesehen.

Die Strömungsleitvorrichtung umfasst zumindest einen sich in Strömungsrichtung des Abgases aufweitenden (vollumfänglich geschlossenen oder auch in Umfangsrichtung einfach oder mehrfach unterbrochenen) Trichterring. Dabei kann der Mantel des Trichterrings im Längsschnitt gerade, gekrümmt oder abgewinkelt ausgebildet sein. Eine Verstellung eines solchen Trichterrings kann insbesondere ein Vergrößern des von diesem freigegebenen Öffnungsquerschnitts umfassen. Durch die Integration eines solchen Trichterrings in die Strömungsleitvorrichtung kann eine besonders vorteilhafte Beeinflussung des diese durchströmenden Abgasstroms erreicht werden.

Ein erfindungsgemäßes Verfahren zum Betreiben einer solchen Abgasbehandlungsvorrichtung sieht vor, dass die Strömungsleitvorrichtung in Abhängigkeit von der Größe des durch die Abgasbehandlungsvorrichtung zu führenden Abgasmassenstroms derart verstellt wird, dass bei einem relativ kleinen Abgasmassenstrom eine relativ starke Fokussierung des Abgasstroms erreicht wird.

Bevorzugt kann vorgesehen sein, dass mindestens ein erster Trichterring und ein oder mehrere den ersten Trichterring (in radialer Richtung bezüglich einer Längsachse des ersten Trichterrings) umgebende(r) und besonders bevorzugt koaxial (bezüglich der jeweiligen Längsachsen) zu diesem angeordnete(r) zweite(r) Trichterring(e) vorgesehen sind. Dabei ist weiterhin bevorzugt vorgesehen, dass der/die zweite(n) Trichterring(e) auch bezüglich der Axialrichtung (bezogen auf die Längsachse des ersten Trichterrings) den ersten Trichterring umgibt/umgeben. Es kann somit vorteilhafterweise vorgesehen sein, dass der erste Trichterring und der/die zweite(n) Trichterring(e) in axialer Richtung nicht zueinander versetzt angeordnet sind. Durch mindestens zwei sich hinsichtlich ihrer Durchmesser und damit auch der von diesen ausgebildeten Öffnungsquerschnitte unterscheidende Trichterringe kann eine besonders vorteilhafte und insbesondere auch gleichmäßige Anströmung des Abgasbehandlungselements realisiert werden.

In einer weiterhin bevorzugten Ausgestaltung der erfindungsgemäßen Abgasbehandlungsvorrichtung kann vorgesehen sein, dass der erste Trichterring und der/die zweite(n) Trichterring(e) gekoppelt vergrößerbar ausgebildet, diese somit nicht unabhängig voneinander mittels der Verstellvorrichtung verstellbar sind. Dadurch kann zum einen ein einziger Aktor der Verstellvorrichtung zur Verstellung der mindestens zwei Trichterringe genutzt werden. Zudem kann dadurch der Regelungsaufwand für den Betrieb der erfindungsgemäßen Abgasbehandlungsvorrichtung gering gehalten werden. Eine voneinander unabhängige Verstellbarkeit der mindestens zwei Trichterringe mittels der Verstellvorrichtung kann jedoch unter Umständen ebenfalls vorteilhaft umsetzbar sein.

Der oder die Trichterringe können zumindest (und gegebenenfalls auch ausschließlich) einlassseitig (d.h. an demjenigen Ende, an dem im Betrieb der Abgasbehandlungsvorrichtung der Abgasströmung in den entsprechenden Trichterring eintritt) hinsichtlich ihres Öffnungsquerschnitts verstellbar ausgebildet sein, weil durch eine mehr oder weniger erfolgende Veränderung der Öffnungsquerschnitte des oder der Trichterringe im Bereich ihres Einlasses eine besonders vorteilhafte Beeinflussung des Abgasstroms erreicht werden kann. Dies ist darin begründet, dass durch eine (ausschließlich) einlassseitige Vergrößerung des Öffnungsquerschnitts eines Trichterring eine starke Fokussierung des Abgasstroms infolge einer Verringerung des Öffnungswinkel, den der Mantel des Trichterrings mit dessen Längsachse einschließt, erreicht werden kann.

Eine Ausgestaltung der erfindungsgemäßen Abgasbehandlungsvorrichtung, bei der der oder die Trichterringe einlass- und auslassseitig vergrößerbar ausgebildet sind, ist jedoch ebenfalls vorteilhaft umsetzbar. In diesem Fall sollte weiterhin bevorzugt vorgesehen sein, dass der Einlass und Auslass des (jedes) Trichterrings gekoppelt und somit nicht voneinander unabhängig verstellbar sind, weil dafür wiederum lediglich ein einziger Aktor der Verstellvorrichtung ausreichend sein kann und der Regelungsaufwand für die Ansteuerung der Verstellvorrichtung entsprechend gering gehalten werden kann.

Eine konstruktiv einfache und damit kostengünstig umsetzbare Ausgestaltung einer erfindungsgemäßen Abgasbehandlungsvorrichtung kann dadurch realisiert werden, dass der oder die Trichterringe (jeweils) aus mehreren sich in Umfangsrichtung überlappenden Teilringschalen ausgebildet sind, wobei das Maß der Überlappung zur Verstellung des oder der Trichterringe veränderbar ist.

Weiterhin bevorzugt kann vorgesehen sein, dass die Strömungsleitvorrichtung (zumindest ein Strömungsleitelement davon) in zumindest einer Stellung einen Öffnungswinkel mit einer Längsachse der Abgasbehandlungsvorrichtung (bei einer Ausgestaltung der Strömungsleitvorrichtung in Form mindestens eines Trichterrings auch mit der entsprechenden Längsachse des Trichterrings) von zwischen 5° und 9°, vorzugsweise von ca. 7° einschließt. Sofern die erfindungsgemäße Abgasbehandlungsvorrichtung derart ausgebildet ist, dass sich bei einem Verstellen der Strömungsleitvorrichtung dieser Öffnungswinkel verändert, so stellt diese Stellung, bei der der Öffnungswinkel zwischen 5° und 9°, vorzugsweise ca. 7° beträgt, vorteilhafterweise diejenige Stellung innerhalb eines Verstellbereichs dar, in der der Öffnungswinkel maximal ist.

Die Erfindung betrifft weiterhin einen Abgasstrang für eine Brennkraftmaschine, die neben mindestens einer erfindungsgemäßen Abgasbehandlungsvorrichtung zumindest noch zu der oder den Abgasbehandlungsvorrichtungen hin und/oder von diesen weg führende Abgasrohrleitungen umfasst. Weiterhin bevorzugt kann in diesen Abgasstrang noch eine Turbine eines Abgasturboladers integriert sein, die insbesondere stromauf des oder eines der Abgasbehandlungsvorrichtungen angeordnet ist. Dabei kann auch vorgesehen sein, dass sich ein Einlass dieser Abgasbehandlungsvorrichtung direkt an einen Auslass der Turbine anschließt. Derart kompakte Integrationen von Funktionskomponenten (Turbine, Abgasbehandlungsvorrichtungen, etc.) sind, bedingt durch den zur Verfügung stehenden relativ kleinen Bauraum, insbesondere bei einem Abgasstrang für eine Brennkraftmaschine eines Kraftfahrzeugs, häufig anzutreffen. Die somit geringen Distanzen zwischen einem Laufrad der Turbine und dem Abgasbehandlungselement der Abgasbehandlungsvorrichtung verhindern in der Regel eine vorteilhafte Strömungsführung ausschließlich durch eine sich in Richtung des Abgasbehandlungselements aufweitende Ausgestaltung der Gehäuse von Turbine und Abgasbehandlungsvorrichtung, so dass hier die vorteilhafte Wirkung einer die Abgasströmung auf einen größeren Strömungsquerschnitt verteilenden Strömungsleitvorrichtung besonders vorteilhaft zur Geltung kommen kann.

Weiterhin betrifft die Erfindung eine Brennkraftmaschine mit einem Verbrennungsmotor und einem solchen Abgasstrang sowie ein Kraftfahrzeug, insbesondere radbasiertes Kraftfahrzeug, mit einer solchen Brennkraftmaschine. Die Brennkraftmaschine kann dabei insbesondere für den Fahrantrieb des Kraftfahrzeugs vorgesehen sein.

Die unbestimmten Artikel ("ein", "eine", "einer und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt:
- Fig. 1:: in einer vereinfachten Darstellung einen Längsschnitt durch eine Turbine eines Abgasturboladers und durch eine sich in Strömungsrichtung an einen Auslass der Turbine anschließende erfindungsgemäße Abgasbehandlungsvorrichtung;

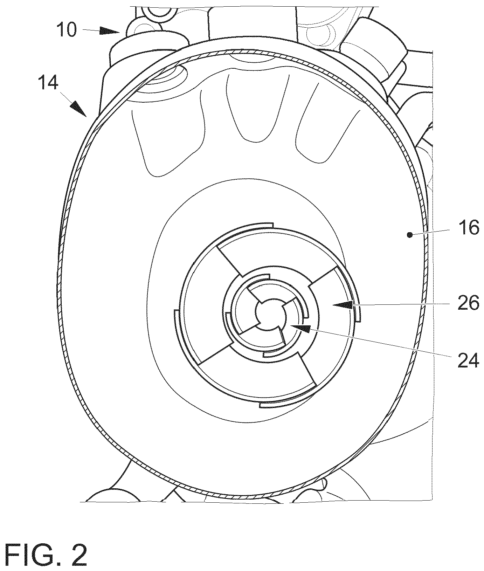

- Fig. 2:: einen Querschnitt durch die Abgasbehandlungsvorrichtung mit Blick auf den Auslass der Turbine;

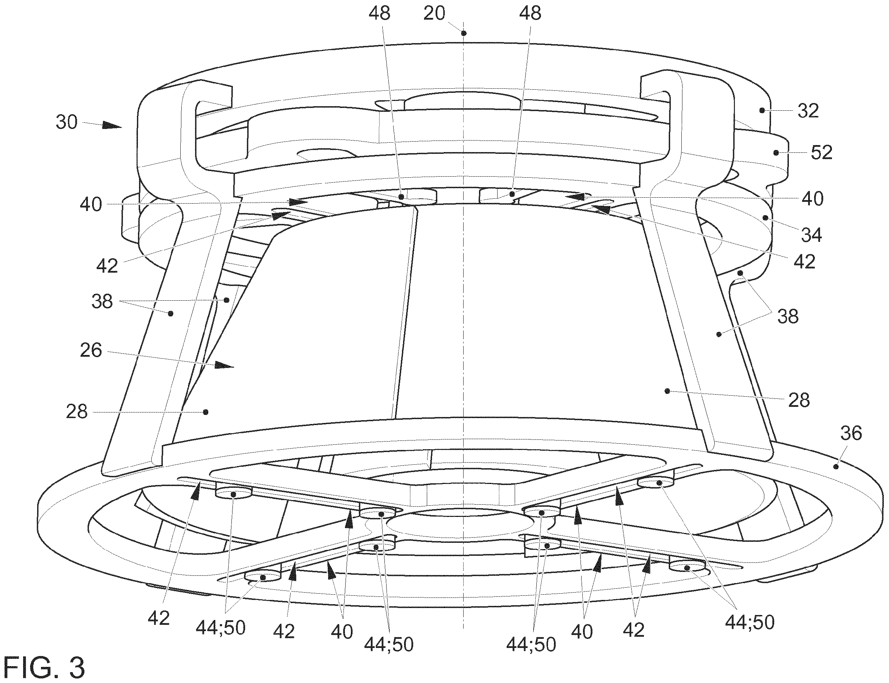

- Fig. 3:: in einer ersten perspektivischen Darstellung eine Strömungsleitvorrichtung, wie sie in der Abgasbehandlungsvorrichtung gemäß den Fig. 1 und 2 vorgesehen ist;

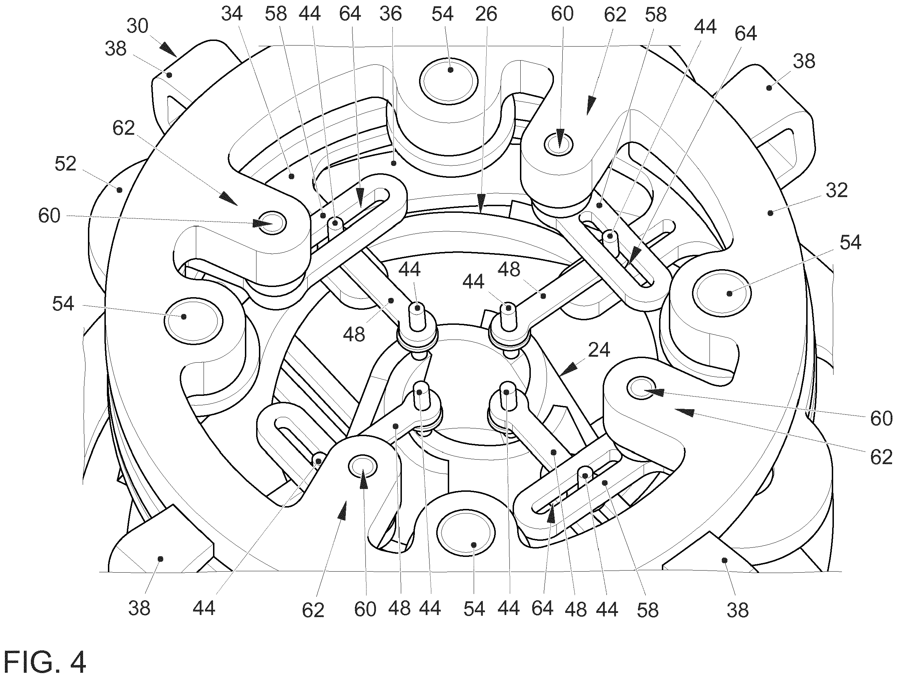

- Fig. 4:: die Strömungsleitvorrichtung gemäß der Fig. 3 in einer zweiten perspektivischen Darstellung;

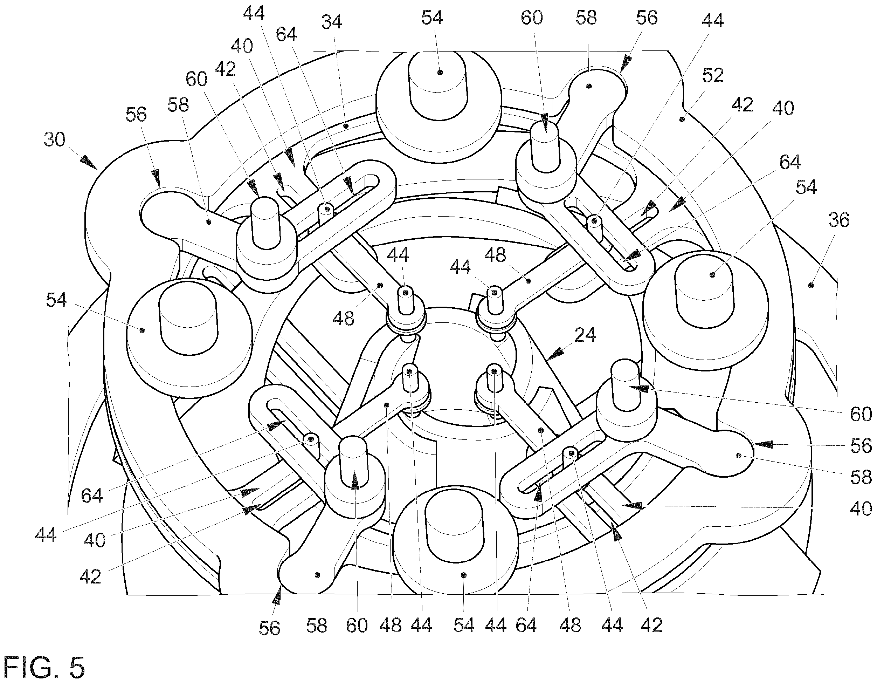

- Fig. 5:: die Strömungsleitvorrichtung gemäß den Fig. 3 und 4 in einer dritten perspektivischen Darstellung;

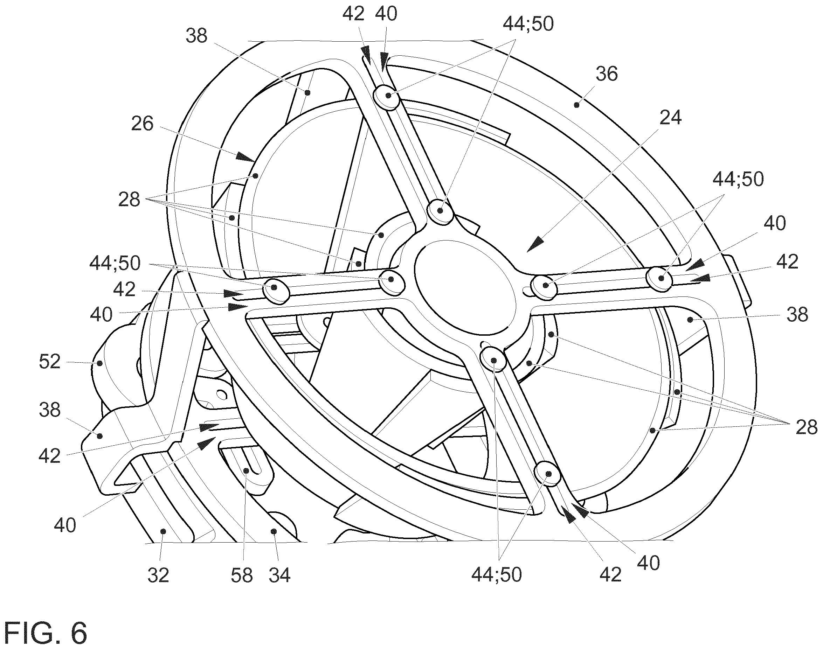

- Fig. 6:: die Strömungsleitvorrichtung gemäß den Fig. 3 bis 5 in einer vierten perspektivischen Darstellung; und

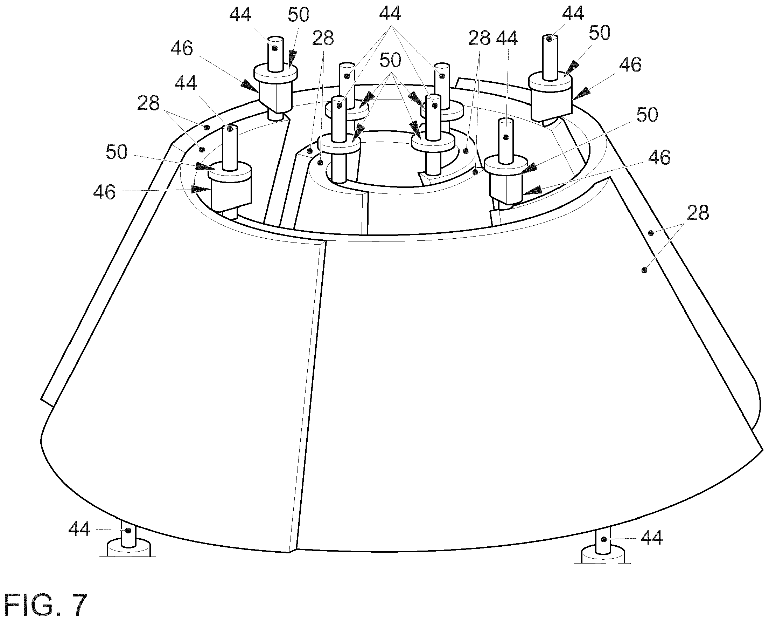

- Fig. 7:: die Trichterringe der Strömungsleitvorrichtung gemäß den Fig. 3 bis 6 in isolierter Darstellung.

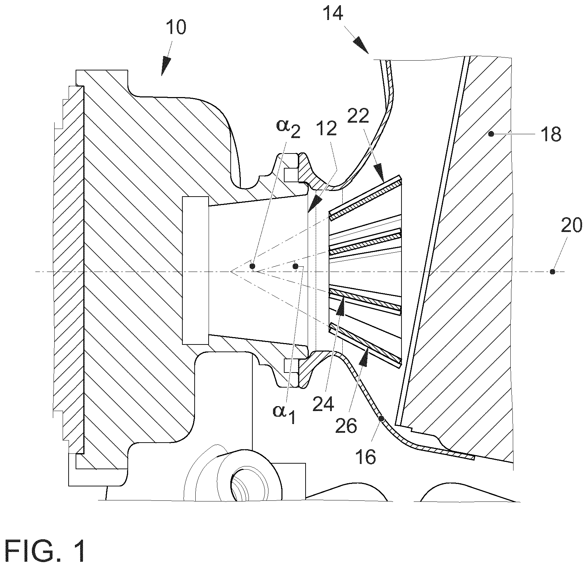

Die Fig. 1 zeigt schematisch eine Turbine 10 eines Abgasturboladers, die in einen Abgasstrang einer Brennkraftmaschine (im Übrigen nicht dargestellt) integriert ist und von Abgas, das durch Verbrennung eines Kraftstoff-Luft-Gemisches in Brennräumen eines Verbrennungsmotors der Brennkraftmaschine erzeugt wurde, durchströmt wird. Dabei wird in bekannter Weise ein (nicht dargestelltes) Turbinenlaufrad der Turbine 10 rotierend angetrieben, wobei diese Rotation über eine Welle auf ein Verdichterlaufrad eines Verdichters des Abgasturboladers übertragen wird. Diese Rotation des Verdichterlaufrads führt zu einer Verdichtung von dem Verbrennungsmotor über einen Frischgasstrang zuzuführenden Frischgas.

Nach dem Abströmen des Turbinenlaufrads verlässt der Abgasstrom die Turbine 10 über einen in ein Gehäuse der Turbine 10 integrierten Auslass und tritt daraufhin über einen Einlass 12 in eine Abgasbehandlungsvorrichtung 14 ein, die ebenfalls in den Abgasstrang der Brennkraftmaschine integriert ist. Die Abgasbehandlungsvorrichtung 14 umfasst ein Gehäuse 16, innerhalb dessen ein Abgasbehandlungselement 18 angeordnet ist. Das Gehäuse 16 der Abgasbehandlungsvorrichtung 14 ist mehrteilig ausgebildet, wobei ein Gehäuse des Abgasbehandlungselements 18 einen Abschnitt des Gehäuses 16 der Abgasbehandlungsvorrichtung 14 darstellt. Das Gehäuse 16 der Abgasbehandlungsvorrichtung 14 bildet weiterhin einen Auslass (nicht dargestellt) aus, der stromabwärts des Abgasbehandlungselements 18 angeordnet ist und an den sich ein weiterer Abschnitt des Abgasstrangs anschließt.

Bei dem Abgasbehandlungselement 18 kann es sich beispielsweise um eine Filterstruktur handeln, die dazu dient, in dem Abgas mitgeführte Partikel herauszufiltern. Ebenso kann es sich bei dem Abgasbehandlungselement 18 um eine von dem Abgas durchströmbare Tragstruktur handeln, die teilweise oder vollständig aus einem Katalysatormaterial besteht oder mit einem solchen Katalysatormaterial beschichtet ist und in bekannter Weise eine katalytisch unterstützte Umwandlung von in dem Abgas enthaltenen und als Schadstoffe deklarierten Komponenten in als unschädlich angesehene Komponenten bewirkt.

Das Abgasbehandlungselement 18 ist in einem Hauptabschnitt des Gehäuses 16 angeordnet, der von dem Einlass 12 der Abgasbehandlungsvorrichtung 14 beabstandet ist. Zwischen dem Einlass 12 und dem Abgasbehandlungselement bildet das Gehäuse 16 einen Einlassabschnitt aus, der sich, ausgehend von dem Einlass 12 und hin zu dem Abgasbehandlungselement 18, hinsichtlich des von diesem ausgebildeten Strömungsquerschnitts stark vergrößert. Diese Vergrößerung des Strömungsquerschnitts ist durch den im Vergleich zu dem Öffnungsquerschnitt des Einlasses12 großen Durchströmungsquerschnitt des Abgasbehandlungselements 18 bedingt. Der vergleichsweise große Durchströmungsquerschnitt des Abgasbehandlungselements 18 ist zur Erzielung eines möglichst geringen Strömungswiderstands für das Abgas und einer möglichst langen Standzeit des Abgasbehandlungselements 18 (zumindest bis zu einer dann erforderlichen Regeneration) erforderlich.

Die relativ starke Vergrößerung des Strömungsquerschnitts in dem Einlassabschnitt des Gehäuses 16, die zu entsprechend großen Öffnungswinkeln, die von der Innenseite des Gehäuses 16 mit einer Längsachse 20 der Abgasbehandlungsvorrichtung eingeschlossen werden, führt, wirkt sich ungünstig auf die Strömung des Abgases aus. Insbesondere begünstigen relativ große Öffnungswinkel Wirbelbildungen in der Abgasströmung, die auch zu Strömungsablösungen und Rückströmungen führen können. Strömungstechnisch wäre somit ein möglichst großer Abstand zwischen dem Einlass 12 und dem Abgasbehandlungselement 18 vorteilhaft, weil dies die Ausgestaltung möglichst kleiner Öffnungswinkel möglich machen würde. Dies ist jedoch in vielen Fällen bauraumbedingt nicht möglich, wie dies die direkte und sehr nahe Integration von Turbine 10 und Abgasbehandlungsvorrichtung 14 in den Abgasstrang gemäß der Fig. 1 verdeutlicht.

Um die negativen Auswirkungen, die die relativ starke Vergrößerung des Strömungsquerschnitts des Gehäuses 16 in dem Einlassabschnitt mit sich bringt, zumindest teilweise zu kompensieren, ist innerhalb des Einlassabschnitts eine Strömungsleitvorrichtung 22 angeordnet. Diese umfasst zwei koaxial (zueinander und zu der zuvor definierten Längsachse 20 der Abgasbehandlungsvorrichtung 14) angeordnete Trichterringe 24, 26, deren Mäntel sich in Strömungsrichtung des Abgases aufweiten, wobei die Öffnungswinkel α₁, α₂ dieser Trichterringe 24, 26 kleiner als ein (mittlerer) Öffnungswinkel sind, der von dem Einlassabschnitt des Gehäuses 16 ausgebildet ist. Dabei ist der Öffnungswinkel α₁ des inneren Trichterrings 24, der in etwa 7° beträgt, kleiner als derjenige des den inneren Trichterring 24 radial umgebenden äußeren Trichterrings 26. Durch die Strömungsleitvorrichtung 22 kann eine möglichst vorteilhafte Anströmung des Abgasbehandlungselements 18 durch das Abgas in im Wesentlichen dem vollständigen von diesem ausgebildeten Strömungsquerschnitt erreicht werden.

Die beiden Trichterringe 24, 26 sind erfindungsgemäß verstellbar ausgebildet. Konkret ist vorgesehen, dass diese hinsichtlich ihres Öffnungsquerschnitts verändert werden können, ohne dass sich dabei die von diesen ausgebildeten Öffnungswinkel α₁, α₂ verändern. Dazu umfasst jeder der Trichterringe 24, 26 eine Mehrzahl von Teilringschalen 28, wobei benachbarte Teilringschalen 28 sich in Umfangsrichtung teilweise überdecken und bezüglich der Umfangsrichtung aufeinander gleiten können. Diese Überdeckung ermöglicht eine Durchmesservergrößerung jedes der Trichterringe 24, 26, ohne dass sich dadurch Öffnungen in deren Mänteln ergeben würden. Diese verbleiben somit stets umlaufend geschlossen. Eine Veränderung des Öffnungsquerschnitts bei den Trichterringen 24, 26 wird mittels einer Verstellvorrichtung 30 bewirkt. Die Verstellvorrichtung 30 umfasst ein käfigartiges Gehäuse für die Trichterringe 24, 26. Dieses Gehäuse umfasst eine erste Einlassträgerplatte 32 und eine zweite Einlassträgerplatte 34 die, bezogen auf die Trichterringe 24, 26, auf Seiten des Einlasses 12 der Abgasbehandlungsvorrichtung angeordnet sind. Weiterhin umfasst das Gehäuse der Verstellvorrichtung eine Auslassträgerplatte 36, die, bezogen auf die Trichterringe 24, 26, auf Seiten des Abgasbehandlungselements 18 angeordnet ist. Dabei sind die Einlassträgerplatten 32, 34 und die Auslassträgerplatte 36 über mehrere Längsträger 38 miteinander unbeweglich verbunden. Mittels dieser Längsträger 38 kann die Strömungsleitvorrichtung 22 zudem an der Innenseite des Gehäuses 16 der Abgasbehandlungsvorrichtung 14 befestigt und somit innerhalb des Einlassabschnitts dieses Gehäuses 16 positioniert werden. Die Längsträger 38 sind dabei jeweils an einem ringförmigen Abschnitt der Einlass - und Auslassträgerplatten 32, 34, 36 befestigt.

Von den ringförmigen Abschnitten der zweiten Einlassträgerplatte 34 und der Auslassträgerplatte 36 erstrecken sich in jeweils radialer Ausrichtung nach Innen balkenförmige Führungsabschnitte 40, die jeweils eine radial ausgerichtete Führungsöffnung 42 ausbilden. Dabei entspricht die Anzahl der Führungsabschnitte 40 der zweiten Einlassträgerplatte 34 und der Auslassträgerplatte 36 jeweils der Anzahl an Teilringschalen 28 beider Trichterringe 24, 26. In den Führungsöffnungen 42 der Führungsabschnitte 40 der zweiten Einlassträgerplatte 34 ist jeweils ein Führungsstift 44 einer dazugehörigen Teilringschale 28 des äußeren Trichterrings 26 geführt. In den Führungsöffnungen 42 der Führungsabschnitte 40 der Auslassträgerplatte 36 ist dagegen jeweils ein Führungsstift 44 einer dazugehörigen Teilringschale 28 von sowohl dem inneren Trichterring 24 als auch dem äußeren Trichterring 26 geführt. Die Führungsstifte 44 sind jeweils im Bereich eines umfangseitigen Endes der dazugehörigen Teilringschale 28 mit dieser verbunden. Durch die Führung der Führungsstifte 44 in den Führungsöffnungen 42 wird ermöglicht, die einzelnen Teilringschalen 28 beider Trichterringe 24, 26 (ausschließlich) in radialer Richtung zu verschieben, wodurch die gewollte Veränderung der Öffnungsquerschnitte erreicht werden kann.

Um sicherzustellen, dass ein Bewegen der Teilringschalen 28 rein translatorisch ist, sind die in den Führungsabschnitten 40 der zweiten Einlassträgerplatte 24 geführten Abschnitte 46 der Führungsstifte 44 der Teilringschalen 28 des äußeren Trichterring 24 jeweils mit einem rechteckigen Querschnitt versehen, wodurch ein Verdrehen dieser Teilringschalen 28 des äußeren Trichterrings 26 und, infolge einer Koppelung zwischen den Teilringschalen 28 des äußeren Trichterrings 26 und des inneren Trichterrings 24, auch der Teilringschalen 28 des inneren Trichterring 24 unterbunden ist. Die übrigen (Abschnitte der) Führungsstifte 44 weisen dagegen einen kreisförmigen Querschnitt auf.

Die Koppelung zwischen den Teilringschalen 28 des inneren Trichterring 24 und des äußeren Trichterrings 26 wird durch Koppelstangen 48 erreicht, die jeweils einen in den Führungsabschnitten 40 der zweiten Einlassträgerplatte 34 geführten Führungsstift 44 einer Teilringschale 28 des inneren Trichterrings 24 mit einem entsprechenden Führungsstift 44 einer Teilringschale 28 des äußeren Trichterrings 26 verbinden.

Die längsaxiale Positionierung der Teilringschalen 28 der Trichterringe 24, 26 innerhalb des käfigförmigen Gehäuses der Strömungsleitvorrichtung 22 wird durch im Querschnitt vergrößerte Anschlagabschnitte 50 der Führungsstifte 44 erreicht, die gleitend an den jeweils bezüglich der Trichterringe 24, 26 distalen Seiten der Führungsabschnitte 40 der zweiten Einlassträgerplatte 34 und der Auslassträgerplatte 36 anliegen. An den Anschlagabschnitten 50 der entsprechenden Führungsstifte 44 liegen zudem die Koppelstangen 48 an.

Die Verstellvorrichtung 30 umfasst weiterhin einen Verstellring 52, der zwischen der ersten Einlassträgerplatte 32 und der zweiten Einlassträgerplatte 34 angeordnet ist und mittels eines (nicht dargestellten) Aktors um die Längsachse 20 der Strömungsleitvorrichtung 22 (diese ist die gemeinsame Längsachse der Trichterringe 24, 26, der Einlass- und Auslassträgerplatten 32, 34, 36 sowie des Verstellrings 52 und entspricht der Längsachse des Abgasbehandlungsvorrichtung 14) gedreht werden kann. Der Aktor kann dabei beispielsweise hydraulisch, pneumatisch oder elektromotorisch angetrieben sein. Die Drehbewegung des Verstellrings 52 wird mittels drehbar in der ersten Einlassträgerplatte 32 gelagerten Führungsrollen 54, die an der Innenseite des Verstellrings 52 anliegen, geführt.

In innenseitigen Einbuchtungen 56 des Verstellrings 52 ist jeweils das freie Ende eines ersten Schenkels eines in etwa L-förmigen Betätigungselements 58 drehbar (jeweils um eine Achse, die in etwa parallel zu der Längsachse 20 der Strömungsleitvorrichtung 22 angeordnet ist) gelagert. Diese Betätigungselemente 58 sind jeweils im Bereich des Übergangs von dem ersten Schenkel zu einem zweiten Schenkel mittels eines Lagerbolzens 60 drehbar innerhalb einer Lageraufnahme 62 der ersten Einlassträgerplatte 32 drehbar (jeweils um eine Achse, die in etwa parallel zu der Längsachse 20 der Strömungsleitvorrichtung 22 angeordnet ist) gelagert. Ein Drehen des Verstellrings 52 relativ zu der ersten Einlassträgerplatte 32 führt somit zu einem Schwenken der Betätigungselemente 58, wobei diese die jeweils dazugehörigen Teilringschalen 28 des äußeren Trichterrings 26 in einer radialen Richtung mitnehmen, da die dazugehörigen einlassseitigen Führungsstifte 44 der Teilringschalen 28 des äußeren Trichterring 26 in Führungsöffnungen 64 der zweiten Schenkel der Betätigungselemente 58 geführt sind. Diese durch die Betätigungselemente 58 bewirkte Bewegung der Teilringschalen 28 des äußeren Trichterrings 26 werden über die Koppelstangen 48 auf die Teilringschalen 28 des inneren Trichterrings 24 übertragen. Folglich sind die beiden Trichterringe 24, 26 gekoppelt mittels der Verstellvorrichtung 30 hinsichtlich ihrer Durchmesser und damit der Öffnungsquerschnitte veränderbar. Gleichzeitig sind diese zudem jeweils einlass- und auslassseitig gekoppelt verstellbar, weil die mit der Verstellvorrichtung 30 einlassseitig auf die Teilringschalen 28 der beiden Trichterringe 24, 26 ausgeübten radialen Bewegungen zu entsprechenden auslassseitigen Bewegungen der Teilringschalen 28 führt. Folglich ist mit einem Verstellen der Trichterringe 24, 26 keine relevante Veränderung der von diesen ausgebildeten Öffnungswinkel α₁, α₂ verbunden.

Die Verstellbarkeit der Strömungsleitvorrichtung 22 ermöglicht eine Anpassung der Öffnungsquerschnitte der Trichterringe 24, 26 an sich ändernde Betriebsbedingungen der Brennkraftmaschine und insbesondere an unterschiedliche Abgasmassenströme. Konkret ist vorgesehen, bei abnehmenden Abgasmassenströmen die Öffnungsquerschnitte der Trichterringe 24, 26 zu vergrößern, um eine stärkere Fokussierung der Anströmung des Abgasbehandlungselements 18 durch die Abgasströmung zu erreichen. Anders als bei einem relativ großen Abgasmassenstrom, bei dem durch die Strömungsleitvorrichtung 22 eine möglichst vollflächige Anströmung des Abgasbehandlungselements 18 über dem gesamten Strömungsquerschnitt unterstützt werden soll, um einen ausreichenden Durchsatz der Abgasströmung durch die Abgasbehandlungsvorrichtung zu gewährleisten, soll bei einem relativ kleinen Abgasmassenstrom das Abgasbehandlungselement 18 lediglich in einem Teilbereich angeströmt werden. Dadurch kann erreicht werden, dass der noch angeströmte und somit durchströmte Bereich des Abgasbehandlungselements 18 trotz des insgesamt nur geringen Wärmeenergiestroms des Abgases entweder möglichst schnell einen definierten Betriebstemperaturbereich erreicht, wodurch ein schnelles Wirksamwerden des Abgasbehandlungselements 18 erreicht werden kann, oder die Betriebstemperatur des Abgasbehandlungselements 18 in diesem Teilbereich innerhalb des Betriebstemperaturbereichs gehalten wird, was ein Aufrechterhalten der Wirkung des Abgasbehandlungselements 18 ermöglicht. Würde dagegen ein relativ kleiner Abgasmassenstrom über den gesamten Strömungsquerschnitt auf das Abgasbehandlungselement 18 verteilt werden, so würde auch die von der Abgasströmung auf das Abgasbehandlungselement übertragbare Wärmeenergie entsprechend verteilt, was - lokal betrachtet - zu einem verlangsamten Aufwärmen oder aber zu einem zu starken Abkühlen des Abgasbehandlungselements 18 führen könnte.

Durch ein Vergrößern der Öffnungsquerschnitte der Trichterringe 24, 26 bei einem relativ kleinen Abgasmassenstrom kann somit die strömungsaufweitende Wirkung der Strömungsleitvorrichtung 22 verringert werden, so dass der Abgasstrom in zunehmendem Maße auf den in Überdeckung mit dem Einlass 12 angeordneten Teilbereich des Abgasbehandlungselements 18 fokussiert wird.

In der Fig. 1 ist eine Stellung der Strömungsleitvorrichtung 22 dargestellt, bei der die Trichterringe 24, 26 den jeweils kleinstmöglichen Öffnungsquerschnitt freigeben. Diese Stellung der Strömungsleitvorrichtung 22 kann beispielsweise bei einem Volllastbetrieb der Brennkraftmaschine mit einem entsprechend großen Abgasmassenstrom vorgesehen sein. Bei sich verringerndem Abgasmassenstrom können die Trichterringe 24, 26 dagegen stufenweise oder kontinuierlich hin zu größeren Öffnungsquerschnitten verstellt werden, wobei auch vorgesehen sein kann, dass in einer Endstellung der äußere Trichterring 26 innenseitig an dem Gehäuse 16 der Abgasbehandlungsvorrichtung anliegt.

### BEZUGSZEICHENLISTE

- 10: Turbine
- 12: Einlass
- 14: Abgasbehandlungsvorrichtung
- 16: Gehäuse
- 18: Abgasbehandlungselement
- 20: Längsachse
- 22: Strömungsleitvorrichtung
- 24: innerer Trichterring
- 26: äußerer Trichterring
- 28: Teilringschale
- 30: Verstellvorrichtung
- 32: erste Einlassträgerplatte
- 34: zweite Einlassträgerplatte
- 36: Auslassträgerplatte
- 38: Längsträger
- 40: Führungsabschnitt
- 42: Führungsöffnung in dem Führungsabschnitt
- 44: Führungsstift
- 46: Abschnitt des Führungsstifts mit rechteckigem Querschnitt
- 48: Koppelstangen
- 50: Anschlagabschnitt des Führungsstifts
- 52: Verstellring
- 54: Führungsrolle
- 56: Einbuchtung des Verstellrings
- 58: Betätigungselement
- 60: Lagerbolzen des Betätigungselements
- 62: Lageraufnahme der ersten Einlassträgerplatte
- 64: Führungsöffnung des Betätigungselements

## Patentansprüche

1. Abgasbehandlungsvorrichtung (14) mit einem Gehäuse (16), das einen Einlass (12) ausbildet, wobei sich der von dem Gehäuse ausgebildete Strömungsquerschnitt ausgehend von dem Einlass (12) hin zu einem Hauptabschnitt vergrößert, wobei in dem Hauptabschnitt ein Abgasbehandlungselement (18) angeordnet ist und wobei in dem Abschnitt zwischen dem Einlass (12) und dem Hauptabschnitt eine Strömungsleitvorrichtung (22) innerhalb des von dem Gehäuse (16) begrenzten Innenraums angeordnet ist, wobei die Strömungsleitvorrichtung (22) dazu dient, eine Abgasströmung aufzuweiten, und wobei eine Verstellvorrichtung (30) zur Veränderung der Position und/oder Ausrichtung der Strömungsleitvorrichtung (22) vorgesehen ist, **dadurch gekennzeichnet, dass** die Strömungsleitvorrichtung (22) einen sich in Strömungsrichtung aufweitenden Trichterring (24, 26) umfasst.

2. Abgasbehandlungsvorrichtung (14) gemäß Anspruch 1, **dadurch gekennzeichnet, dass** die Strömungsleitvorrichtung (22) einen ersten Trichterring (24) und einen den ersten Trichterring (24) umgebenden zweiten Trichterring (26) aufweist.

3. Abgasbehandlungsvorrichtung (14) gemäß Anspruch 2, **dadurch gekennzeichnet, dass** der erste Trichterring (24) und der zweite Trichterring (26) koaxial angeordnet sind.

4. Abgasbehandlungsvorrichtung (14) gemäß Anspruch 2 oder 3, **dadurch gekennzeichnet, dass** der erste Trichterring (24) und der zweite Trichterring (26) gekoppelt verstellbar ausgebildet sind.

5. Abgasbehandlungsvorrichtung (14) gemäß einem der Ansprüche 2 bis 4, **dadurch gekennzeichnet, dass** der/die Trichterring(e) (24, 26) zumindest einlassseitig verstellbar ausgebildet ist/sind.

6. Abgasbehandlungsvorrichtung (14) gemäß Anspruch 5, **dadurch gekennzeichnet, dass** der/die Trichterring(e) (24, 26) einlass- und auslassseitig gekoppelt verstellbar ausgebildet ist/sind.

7. Abgasbehandlungsvorrichtung (14) gemäß einem der Ansprüche 2 bis 6, **dadurch gekennzeichnet, dass** der/die Trichterring(e) (24, 26) aus mehreren sich in Umfangsrichtung überlappenden Teilringschalen (28) ausgebildet ist/sind, wobei das Maß der Überlappung zur Verstellung veränderbar ist.

8. Abgasbehandlungsvorrichtung (14) gemäß einem der vorhergehenden Ansprüche, **dadurch gekennzeichnet, dass** die Strömungsleitvorrichtung (22) in zumindest einer Stellung einen Öffnungswinkel (α₁, α₂) mit einer Längsachse (20) der Abgasbehandlungsvorrichtung (14) von zwischen 5° und 9°, vorzugsweise von ca. 7° einschließt.

9. Verfahren zum Betreiben einer Abgasbehandlungsvorrichtung (14) gemäß einem der vorhergehenden Ansprüche, **dadurch gekennzeichnet, dass** die Strömungsleitvorrichtung (22) in Abhängigkeit von der Größe des durch die Abgasbehandlungsvorrichtung (14) zu führenden oder geführten Abgasmassenstroms derart verstellt wird, dass bei relativ kleinem Abgasmassenstrom eine relativ starke Fokussierung der Abgasströmung erreicht wird.

## Claims

1. Exhaust-gas treatment device (14) having a housing (16) which forms an inlet (12), wherein the flow cross section formed by the housing increases in size proceeding from the inlet (12) toward a main section, wherein an exhaust-gas treatment element (18) is arranged in the main section, and wherein, in the section between the inlet (12) and the main section, a flow-guiding device (22) is arranged within the interior space delimited by the housing (16), wherein the flow-guiding device (22) serves for widening an exhaust-gas flow, and wherein an adjustment device (30) for varying the position and/or alignment of the flow-guiding device (22) is provided, **characterized in that** the flow-guiding device (22) comprises a funnel ring (24, 26) which widens in a flow direction.

2. Exhaust-gas treatment device (14) according to Claim 1, **characterized in that** the flow-guiding device (22) has a first funnel ring (24) and a second funnel ring (26) which surrounds the first funnel ring (24).

3. Exhaust-gas treatment device (14) according to Claim 2, **characterized in that** the first funnel ring (24) and the second funnel ring (26) are arranged coaxially.

4. Exhaust-gas treatment device (14) according to Claim 2 or 3, **characterized in that** the first funnel ring (24) and the second funnel ring (26) are formed so as to be adjustable in coupled fashion.

5. Exhaust-gas treatment device (14) according to one of Claims 2 to 4, **characterized in that** the funnel ring (s) (24, 26) is/are formed so as to be adjustable at least at the inlet side.

6. Exhaust-gas treatment device (14) according to Claim 5, **characterized in that** the funnel ring(s) (24, 26) is/are formed so as to be adjustable in coupled fashion on the inlet side and on the outlet side.

7. Exhaust-gas treatment device (14) according to one of Claims 2 to 6, **characterized in that** the funnel ring (s) (24, 26) is/are formed from multiple ring segment shells (28) which overlap in a circumferential direction, wherein the extent of the overlap is variable for the adjustment.

8. Exhaust-gas treatment device (14) according to one of the preceding claims, **characterized in that** the flow-guiding device (22), in at least one position, encloses an opening angle (α₁, α₂) between 5° and 9°, preferably of approximately 7°, with a longitudinal axis (20) of the exhaust-gas treatment device (14).

9. Method for operating an exhaust-gas treatment device (14) according to one of the preceding claims, **characterized in that**, in a manner dependent on the magnitude of the exhaust-gas mass flow which is to be conducted, or which is conducted, through the exhaust-gas treatment device (14), the flow-guiding device (22) is adjusted such that relatively intense focusing of the exhaust-gas flow is realized in the presence of a relatively small exhaust-gas mass flow.

## Revendications

1. Dispositif de traitement des gaz d'échappement (14) comprenant un boîtier (16) qui constitue une entrée (12), la section transversale d'écoulement réalisée par le boîtier augmentant depuis l'entrée (12) jusqu'à une portion principale, un élément de traitement des gaz d'échappement (18) étant disposé dans la portion principale et un dispositif de guidage de l'écoulement (22) étant disposé dans la portion entre l'entrée (12) et la portion principale à l'intérieur de l'espace interne délimité par le boîtier (16), le dispositif de guidage de l'écoulement (22) servant à élargir un écoulement de gaz d'échappement et un dispositif de réglage (30) étant prévu pour modifier la position et/ou l'orientation du dispositif de guidage de l'écoulement (22), **caractérisé en ce que** le dispositif de guidage de l'écoulement (22) comprend une bague en forme d'entonnoir (24, 26) s'élargissant dans la direction d'écoulement.

2. Dispositif de traitement des gaz d'échappement (14) selon la revendication 1, **caractérisé en ce que** le dispositif de guidage de l'écoulement (22) présente une première bague en forme d'entonnoir (24) et une deuxième bague en forme d'entonnoir (26) entourant la première bague en forme d'entonnoir (24).

3. Dispositif de traitement des gaz d'échappement (14) selon la revendication 2, **caractérisé en ce que** la première bague en forme d'entonnoir (24) et la deuxième bague en forme d'entonnoir (26) sont disposées coaxialement.

4. Dispositif de traitement des gaz d'échappement (14) selon la revendication 2 ou 3, **caractérisé en ce que** la première bague en forme d'entonnoir (24) et la deuxième bague en forme d'entonnoir (26) sont réalisées de manière déplaçable sous forme accouplée.

5. Dispositif de traitement des gaz d'échappement (14) selon l'une quelconque des revendications 2 à 4, **caractérisé en ce que** la/les bagues en forme d'entonnoir (24, 26) est/sont réalisées de manière déplaçable au moins du côté de l'entrée.

6. Dispositif de traitement des gaz d'échappement (14) selon la revendication 5, **caractérisé en ce que** la/les bagues en forme d'entonnoir (24, 26) est/sont réalisées de manière déplaçable sous forme accouplée du côté de l'entrée et de la sortie.

7. Dispositif de traitement des gaz d'échappement (14) selon l'une quelconque des revendications 2 à 6, **caractérisé en ce que** la/les bagues en forme d'entonnoir (24, 26) est/sont réalisées à partir de plusieurs coques de bague partielle (28) se chevauchant dans la direction périphérique, la dimension du chevauchement pouvant être modifiée en vue du réglage.

8. Dispositif de traitement des gaz d'échappement (14) selon l'une quelconque des revendications précédentes, **caractérisé en ce que** le dispositif de guidage de l'écoulement (22), au moins dans une position, forme un angle d'ouverture (α₁, α₂) avec un axe longitudinal (20) du dispositif de traitement des gaz d'échappement (14) compris entre 5° et 9°, de préférence d'environ 7°.

9. Procédé pour faire fonctionner un dispositif de traitement des gaz d'échappement (14) selon l'une quelconque des revendications précédentes, **caractérisé en ce que** le dispositif de guidage de l'écoulement (22) est réglé en fonction de la grandeur du débit massique de gaz d'échappement à guider ou guidé à travers le dispositif de traitement des gaz d'échappement (14) de telle sorte que dans le cas d'un débit massique de gaz d'échappement relativement petit, une focalisation relativement forte de l'écoulement des gaz d'échappement soit obtenue.
